# EUROPÄISCHE PATENTSCHRIFT

(11) **EP 0 931 908 B1**
(45) Veröffentlichungstag und Bekanntmachung des Hinweises auf die Patenterteilung: **04.08.2004**
(21) Anmeldenummer: 98100969.9
(22) Anmeldetag: 21.01.1998
(51) Int. Cl.: E21D 11/08, F16B 19/00

(54) **Tübbingauskleidung für unterirdische zylindrische Bauwerke in Böden mit geringer Standfestigkeit**
Tubing lining for an underground cylindrical construction in low stability soils
Revêtement pour des constructions cylindriques souterraines à faible stabilité du sol

(43) Veröffentlichungstag der Anmeldung: 28.07.1999
(73) Patentinhaber: Wayss & Freytag Ingenieurbau AG, 60489 Frankfurt am Main (DE); DÄTWYLER AG GUMMIWERKE, 6460 Altdorf (CH)
(72) Erfinder:
(74) Vertreter: Boecker, Joachim

(56) Entgegenhaltungen:
- EP-A- 0 317 220
- EP-A- 0 765 991
- DE-A- 2 457 427
- DE-U- 9 109 702
- FR-A- 2 737 535
- GB-A- 2 131 514
- US-A- 3 883 258
- US-A- 4 728 238

## Beschreibung

Die Erfindung betrifft eine Tübbingauskleidung für unterirdische zylindrische Bauwerke in Böden mit geringer Standfestigkeit, wie sie im Oberbegriff des Anspruchs 1 gattungsmäßig beschrieben ist.

In nicht standfesten nachgiebigen Böden wird für die Standfestigkeit einer Tübbingröhre die erhöhte Tragfähigkeit der räumlichen Röhrenschale gegenüber der Tragkraft des ebenen Rings benötigt. Die Tübbingröhre ist jedoch aus einzelnen Elementen - den Tübbings- aufgebaut, die normalerweise statisch nur gelenkig aneinander gesetzt und gerechnet sind. Ohne die stabilisierende Wirkung des einen Gelenkrings aus Tübbings umgebenden tragfähigen Erdreiches wäre eine aus statisch isoliert wirkenden Einzelringen aufgebaute Röhre nicht standfest.

Es ist bekannt, bei Tübbingröhren in Böden mit begrenzter Tragfähigkeit zur Verteilung punktuell wirkender Lastspitzen von einem einzelnen Ring auf einen größeren Bereich der Röhrenschale aufeinanderfolgende Tübbingringe durch geeignete Mittel miteinander zu verdübeln. Die Verdübelung wurde durch Ausbildung von Nut- und Feder- oder von Topf- und Nockenverbindungen an den Stoßflächen der Tübbings und auch bereits durch Dübelbolzen zwischen anliegenden Tübbingflächen vorgenommen.

Die Verwendung von Dübelbolzen ist bekannt z. B. aus der DE P 31 05 743.8-09. Bekannt ist auch, die Dübelzapfen konisch mit gegen das Dübelende abnehmendem Durchmesser auszubilden z. B. nach Roland/Murer, Luzern CH. Nach der Lehre der DE P 31 05 743.8-09 werden stählerne Dübelbolzen verwendet, die in Kunststoffdübelhülsen, die in den Ringstoßflächen der Tübbings angeordnet sind, eingedrückt werden. Es ist auch bekannt, konische Dübel aus Hartholz- oder Kunststoff zu verwenden und in entsprechende im Beton der Ringstoßflächen der Tübbings vorgesehene nicht ausgekleidete Ausnehmungen einzudrücken.

Die Dübelbolzen haben die Aufgabe
- den Tübbing beim Einbau bei nicht exakter Ausrichtung zu zentrieren, und bis zum Schluß des Ringes in seiner Lage zu halten.
- die Rückstellkräfte aus den Dichtungsprofilen nach dem Anpressen des neu eingebauten Tübbings an den zuletzt versetzten Ring bei der Montage aufzunehmen,
- die durch die Verdübelung benachbarter Tübbingringe senkrecht zur Tunnelachse wirkenden Koppelkräfte aus örtlich unterschiedlichen Belastungen und Verformungen der Röhre aufnehmen und auf einen größeren Bereich der Röhrenschale zu verteilen.

Die letztere Aufgabe können die bekannten Dübelbolzenkonstruktionen nur ungenügend erfüllen:
Die aus der DE P 31 05 743.8-09 bekannten Dübelbolzen aus Stahlstäben können korrodieren und damit ihre Tragfähigkeit verlieren. Sie sind in Kunststoffdübelhülsen eingesetzt. Kunststoff ist plastisch verformbar und fließt bei Dauerbelastung. Einer Dauerbelastung durch Koppelkräfte würde sich der Dübelbolzen durch Kriechen der Dübelhülse entziehen. Seine gewünschte Wirkung der Lastverteilung innerhalb der Röhrenschale und der Verformungsbegrenzung der Röhre würde aufgehoben. Dasselbe gilt für plastisch verformbare Dübel aus Kunststoff. Dübel aus Kunststoff oder Holz sind außerdem nur in der Lage Koppelkräfte in begrenzter Größe zu übertragen. Holzdübel sind darüberhinaus als Dauerkonstruktion nur bedingt geeignet, da Holz mindestens in feuchtem Milieu nicht dauerhaft beständig ist.

Die ebenfalls vielfach verwendete Verdübelung der Tübbingringe durch Nut- und Federkonstruktionen hat den Nachteil, daß der Ort der Übertragung der Koppelkräfte nicht exakt festgelegt ist. Die Koppelkraft kann an der äußersten Ecke des Tübbings an einer Feder als dem schwächsten und konstruktiv am schwierigsten bewehrbaren Bereich angreifen und dort zum Ausbruch mehr oder weniger großer Stücke des Tübbings führen. Bei einschaligen, mit Dichtungsbändern in den Längs- und Ringfugen gedichteten Tunnelröhren wird dabei die Dichtung beschädigt, Reparaturen sind dort schwierig und aufwendig.

Die DE 91 09 702 beschreibt eine ähnliche Befestigungsvorrichtung, bei der der Dübelbolzen nach beiden Enden hin stufenförmig abgesetzt ist, wobei zylindrische Eingriffszonen entstehen, in die Ringe aus hochelastischem Material eingelassen sind. Entsprechend stufenweise abgesetzt ist das Einsatzloch für den Bolzen. Lediglich an den äußeren Enden der Bolzen, an den Übergangsstellen zwischen den Einsatzzonen der Bolzen und im Fugenbereich der Einsatzlöcher sind Abschnitte mit relativ großen Konizitäten vorhanden, die jedoch nicht mit den jeweils gegenüberliegenden Flächen des Einsatzloches beziehungsweise des Bolzens in Kontakt stehen. Der bekannte Bolzen kann aus Kunststoff mit Metalleinlagen oder aus einem Rohr mit Kunststoffüberzug bestehen. In den von diesem Kunststoff gebildeten zylindrischen Eingriffszonen sind ringförmig spezielle Materialien eingelassen, über die die Haftkraft mit der Wand des Einsatzloches hergestellt wird.

Aufgabe der Erfindung ist es, die Dübelbolzen zur Verdübelung von Tübbings in Auskleidungen unterirdischer zylindrischer Bauwerke so weiterzubilden, daß sie auch für anfallende hohe Beanspruchungen einsetzbar und berechenbar sind, elastisch auf Ungenauigkeiten der Tübbingherstellung und Verschiebungen zwischen in der Ringfuge anliegenden Tübbings reagieren und sich der ihnen zugewiesenen Funktion nicht durch Kriechen entziehen können und korrosionsbeständig sind.

Die Aufgabe wird gelöst durch eine Tübbingauskleidung mit Dübelbolzen, wie sie im kennzeichnenden Teil des Anspruchs 1 beschrieben ist. Der erfindungsgemäße Dübelbolzen weist einen Kern auf, der massiv oder rohrförmig sein kann, der im wesentlichen die Koppelkraft überträgt und der zu übertragenden Kraft anpaßbar ist. Der Kern kann zweckmäßig aus Stahl oder aus glasfaserbewehrtem Kunststoff aber auch aus jedem anderen geeigneten tragfähigen Werkstoff bestehen. Er wird von einem gummielastischen korrosionsbeständigen Mantel umhüllt. Bei Verwendung von Elastomer, wie es bei Brückenlagern auch eingesetzt wird, das sich unter Last elastisch verformt, tritt für den Mantel kein Kriechen des Materials ein. Die nötige Nachgiebigkeit des Dübels bei der Tübbingmontage bleibt durch das Mantelmaterial und die Formgebung des Mantels erhalten. Der Dübelbolzen kann fabrikmäßig gleichmäßig und kostensparend hergestellt werden. Die Ausnehmung im Beton des Tübbings, in die er eingesetzt wird, ist in einfachster Weise tragfähig herstellbar. Sie kann den eingeleiteten Kräften entsprechend durch Stahlwendel bewehrt werden. Der Rand der Ausnehmung wird zweckmäßig konisch nach außen sich erweiternd ausgebildet, um Kantenpressungen am Betonrand und Abplatzungen von Beton dort zu vermeiden.

Zum Korrisionsschutz des Kerns kann der gummielastische Mantel dienen. Es können jedoch auch korrosionsbeständige Werkstoffe für den Kern verwendet werden. Weiterhin sind korrisionsbeständige Beschichtungen des Kerns - z. B. Verzinkung bei einem stählernen Kern - denkbar.

In weiterer Ausgestaltung der Erfindung kann der Dübel mit einer Sollbruchstelle versehen werden, die den Dübel brechen läßt, bevor eine Überlastung des Betons eintritt. Weiterhin kann der Dübel durch Veränderung des Stahlkerns - z.B. durch Ausbildung in Vollmaterial oder röhrenförmig, durch Variation des Kerndurchmessers bzw. der Wanddicke der Röhre oder der Eigenschaften des Kernwerkstoffes - ohne Veränderung der Außenkontur unterschiedlichen Anforderungen an ein gewünschtes Kraftverformungsverhalten angepaßt werden.

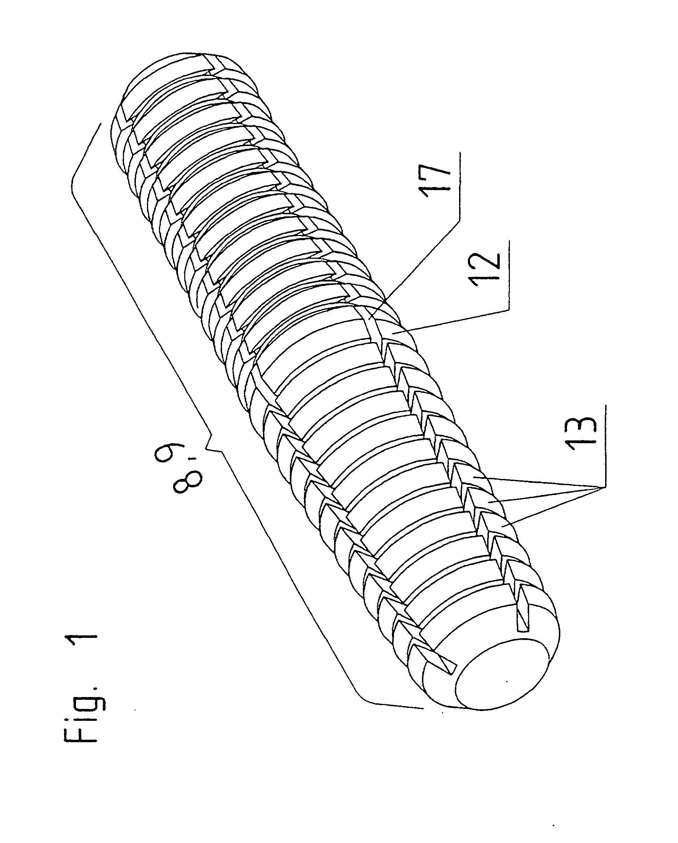

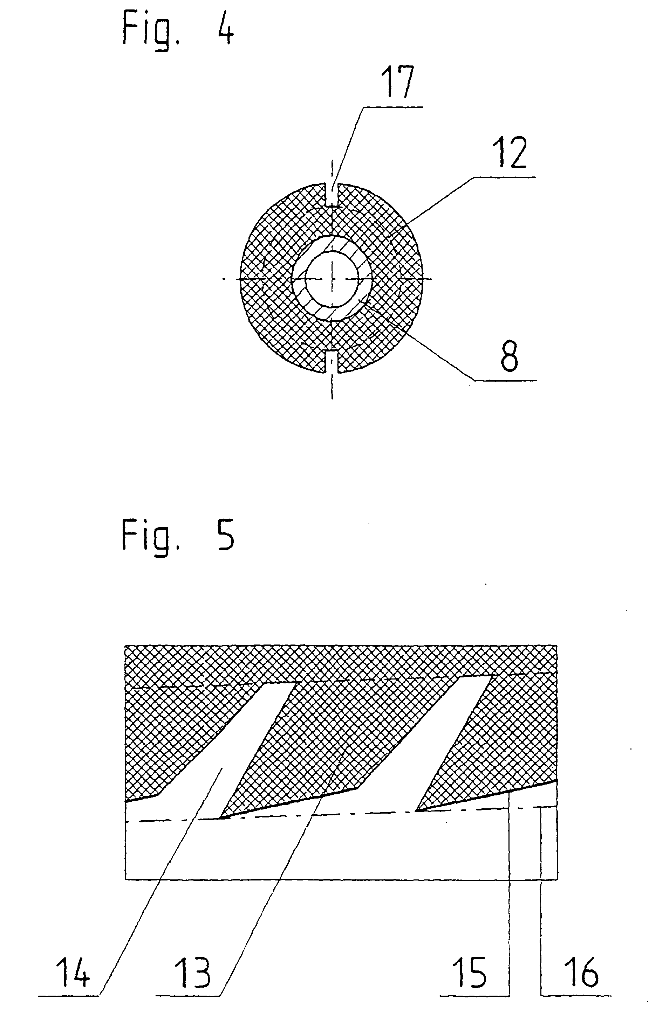

Die Erfindung wird anhand der Figuren 1 - 5 erläutert. Es zeigen:
- Fig. 1: ein Beispiel der Ausbildung eines erfindungsgemäßen Dübelbolzens
- Fig. 2 u. 3: Schnitte in Bauwerkslängsachse durch 2 Varianten einer erfindungsgemäßen Tubbingauskleidung
- Fig. 4: einen Querschnitt durch einen erfindungsgemäßen Dübelbolzen
- Fig. 5: einen Ausschnitt aus dem Dübelmantel in Bolzenlängsachse

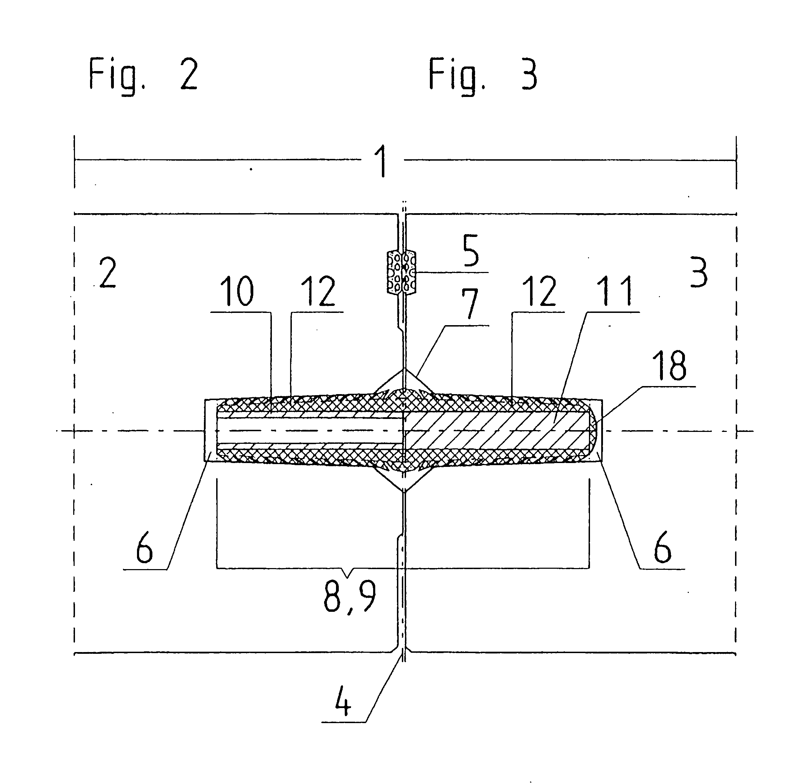

In den Fig. 2 und 3 ist der Ausschnitt einer Tübbingauskleidung 1 eines röhrenförmigen Bauwerks dargestellt. Die Tübbings (2, 3) liegen an der Stoßfuge (4) zweier Tübbingringe aneinander und halten zwischen sich die Fugendichtung (5). Die Tübbings der Ringe sind miteinander durch Dübelbolzen (8, 9), die die Ringfuge (4) durchsetzen, verdübelt. Fig. 2 zeigt das Beispiel eines erfindungsgemäßen Dübelbolzens (8) mit röhrenförmigen tragenden Kern (10), Fig. 3 das eines Dübelbolzens (9) mit massiv stabförmigen Kern (11). Die Dübelbolzen (8, 9) sind aus einem tragfähigem Werkstoff, beispielsweise Stahl oder glasfaser verstärktem Kunstharz. Sie werden kraftschlüssig umhüllt von einem gummielastischen Mantel (12), für den als Werkstoff ein Elastomer geeignet ist.

Der Mantel (12) weist sägezahnförmig ausgebildete, nach außen gerichtete Elemente (13) auf, zwischen denen ringförmige Ausnehmungen (14) freigehalten sind. In die Ausnehmung (14) hinein können sich die Elemente (13) beim Eindrücken des Dübelbolzens (8, 9) in die Aussparungen (6) der Tübbings (2, 3) verformen. Die Elemente (13) umschließen kegelstumpfförmig den tragenden Kern. Die Kontur (15) des Kegelstumpfs ist geringfügig stärker zur Bolzenachse geneigt als die Mantelinnenfläche der Aussparung (6). Die Basispunkte der Kontur (15) aller Elemente (13) bilden die Kontur (16) des Bolzens, die über die Kontur der Mantelinnenfläche der Aussparung (6) hinaussteht. Beim Eindrücken des Bolzens (8, 9) in die Aussparung (6) werden die Elemente (13) in die Ausnehmung (14) hinein verformt. Ihre Mantelflächen werden dabei fest gegen die Mantelinnenflächen der Aussparung (16) angedrückt.

Der Bolzenkern (10, 11) kann korrosionsbeständig sein. Er kann auch unabhängig vom Mantel korrisionsschützende beschichtet sein, z. B. durch Verzinkung bei Stahlkernen. Der Korrisionsschutz des Kerns (10, 11) kann auch durch allseitige vollständige Umhüllung des Kerns durch den Mantel (12) erreicht werden, indem der Mantel einen Deckel (18) aufweist, der auch die Stirnseiten des Kerns direkt umschließt.

## Patentansprüche

1. Tübbingauskleidung (1) für unterirdische zylindrische Bauwerke in Böden mit geringer Standfestigkeit, wobei die Tunnelröhre aus im wesentlichen zylindrischen Tübbingringen besteht und jeder Ring aus Segmenten - sogenannten Tübbings - aufgebaut ist und wobei die Tübbinge (2,3) anliegender Ringe miteinander durch sich von der Mitte gegen die Enden etwas konisch sich verjüngende Bolzen verdübelt sind, die die Ringfuge (4) zwischen anliegenden Ringen durchsetzen und die beidseitig kraftschlüssig in entsprechend konischen Aussparungen (6) in den Seitenflächen der an der Ringfuge benachbarten Tübbings einbinden, **dadurch gekennzeichnet, daß** die Bolzen (8,9) zur Verdübelung der Tübbings (2, 3) einen die Dübelkraft im wesentlichen übertragenden Kern (10, 11) aus geeignetem Werkstoff aufweisen, der kraftschlüssig und einstückig mit einem gummielastischen Mantel (12), z.B. aus Elastomer, umhüllt ist.

2. Tübbingauskleidung nach Anspruch 1, **dadurch gekennzeichnet, daß** der gummielastische Mantel (12) des Bolzens (8,9) eine konische Kontur (16) hat und über seine Länge symmetrisch zur Mitte ringförmig senkrecht zur Bolzenachse angeordnete, in Schnitten durch die Bolzenachse sägezahnförmige ausgebildete Elemente (13) aufweist, die zwischen sich weniger als 90° zur Bolzenmitte geneigte Ausnehmungen (14) freihalten, in die hinein Material des Mantels beim Einpressen des Dübelbolzens (8, 9) in die Aussparungen (6) der Tübbings (1, 2) elastisch verformbar sind.

3. Tübbingauskleidung nach den Ansprüchen 1 u. 2 **dadurch gekennzeichnet,**
• **daß** die Außenkontur (15) des sägezahnförmigen Elements (13) des Mantels (12) konisch zur Bolzenachse geneigt ist mit einem Neigungswinkel der mindestens geringfügig größer ist als der Neigungswinkel der Mantelinnenfläche der Aussparungen (6) im Beton der Tübbings (2, 3) und
• **daß** die Außenkontur (16) des Bolzens mindestens geringfügig größer ist als die Mantelinnenfläche der Aussparungen (6)

4. Tübbingauskleidung nach den Ansprüchen 1 - 3 **dadurch gekennzeichnet, daß** der Mantel (12) des Bolzens (8,9) in Längsachse verlaufende Ausnehmungen (17) aufweist, durch die die Aussparungen (6) beim Eindrücken des Bolzens entlüftbar sind.

5. Tübbingauskleidung nach den Ansprüchen 1 - 4, **dadurch gekennzeichnet, daß** der Kern (10,11) des Bolzens (8,9) eine Sollbruchstelle - beispielsweise durch eine Kerbe in der Außenkontur - aufweist, die den Bruch des Bolzens bei Überschreitung des zulässigen Lochlaibungsdrucks in der Aussparung (6) des Tübbings (2,3) eintreten läßt.

6. Tübbingauskleidung nach den Ansprüchen 1 - 5, **dadurch gekennzeichnet, daß** der Bolzen (8,9) durch geeignete Veränderung des Kernes (10,11) - z.B. durch Ausbildung in Vollmaterial oder röhrenförmig, durch Variation des Kerndurchmessers bzw. der Wanddicke der Röhre oder der Eigenschaften des Kernwerkstoffes - ohne Veränderung seiner Außenkontur an ein bestimmtes Kraftverformungsverhalten anpaßbar ist.

## Claims

1. Tubbing lining (1) for cylindrical underground constructions in soils of poor stability, wherein the tunnel tube consists of substantially cylindrical tubbing rings with each ring being built up of segments - so-called tubbings - and wherein the tubbings (2,3) of adjacent rings are fastened with each other by bolts, which are slightly tapered from their middle section towards their ends, and which bolts extend through the circular gap (4) between adjacent rings and engaged on either side by frictional connection with corresponding conical recesses (6) arranged on the front faces of the tubbings adjacent to the circular gap, **characterized in that** the bolts (8,9) for dowelling of the tubbings (2,3) comprise a core (10,11) of a suitable material which core substantially transfers the dowelling force and is coated by frictional connection and in one piece with a rubber-elastical envelope (12), as for example elastomer.

2. Tubbing lining according to claim 1, **characterized in that** the rubber-elastical envelope (12) of the bolts (8,9) is shaped with a conical contour (16) and is provided along its length and symmetric to its mid-section with ring-shaped elements (13) which are arranged perpendicular to the bolt axis and exhibit in sections through the bolt axis a sawtooth-like shape, which elements are spaced from each other by recesses (14) which are inclined with respect to the bolt centre by less than 90°, and into which recesses the material of the envelope is elastically deformed when the dowel-bolts (8,9) are pressed into the recesses (6) of the tubbings (1,2).

3. Tubbing lining according to claim 1 and 2, **characterized in that** the outer contour (15) of the saw-tooth-shaped elements (13) of the envelope (12) are inclined conically with respect to the bolt axis with an angle of inclination which is at least somewhat larger than the inclination angle of the inner surface of the recesses (6) in the concrete of the tubbings (2,3) and that the outer contour (16) of the bolt is at least slightly larger than the inner generated surface of the recesses (6).

4. Tubbing lining according to any of claims 1 to 3, **characterized in that** the envelope (12) of the bolt (8,9) is provided with recesses (17) extending in the longitudinal axis of the bolt through which recess (17) the air in the recesses (6) may escape when the bolts are pressed in.

5. Tubbing lining according to any of claims 1 to 4, **characterized in that** the core (10,11) of the bolts (8,9) is provided with a predetermined breaking point - for example by a notch in the outer contour - , which causes rupture of the bolts at surpassing the admissible pressure on the inner surface of the recesses (6) of the tubbings (2,3).

6. Tubbing lining according to any of claims 1 - 5, **characterized in that** the bolt (8,9), by a suitable modification of the core (10,11), is adjustable without modifying its outer contour to a specific behaviour with respect to its deformation under force - substantially by modelling the core as a solid or tube-like body, by variation of the core diameter and the wall thickness of the tube, respectively, or by varying the properties of the core material.

## Revendications

1. Revêtement (1) de tubage pour des ouvrages cylindriques souterrains dans des sols de faible stabilité, dans lequel le tube de tunnel est constitué de viroles de tubage sensiblement cylindriques et chaque virole est constituée de segments, dénommés tubages, et les tubages (2, 3) de viroles voisines étant chevillés entre elles par des chevilles se rétrécissant à peu près coniquement du milieu vers les extrémités, qui traversent les joints (4) de virole entre des viroles voisines et qui s'encastrent des deux côtés positivement dans des évidements (6) coniques correspondants des tubages voisins sur le joint de virole, **caractérisé en ce que** les chevilles (8, 9) ont, pour cheviller les tubages (2, 3), un noyau (10, 11) en un matériau approprié, transmettant essentiellement la force de chevillage et entouré positivement et d'un seul tenant d'une enveloppe (12) ayant l'élasticité du caoutchouc, par exemple en élastomère.

2. Revêtement de tubage suivant la revendication 1, **caractérisé en ce que** l'enveloppe (12) ayant l'élasticité du caoutchouc de la cheville (8, 9) a un contour (16) conique et des éléments (13) ayant en coupe une forme en dent de scie passant par l'axe de la cheville et disposés perpendiculairement à l'axe de la cheville, annulairement par rapport au milieu, symétriquement sur sa longueur, qui dégagent à peu près entre eux des évidements (14) inclinés de moins de 90° par rapport à l'axe de la cheville, évidements dans lesquels du matériau de l'enveloppe peut être déformé élastiquement lorsque la cheville (8, 9) est enfoncée dans les évidements (6) du tubage (1, 2).

3. Revêtement de tubage suivant la revendication 1 ou 2, **caractérisé**
. **en ce que** le contour (15) extérieur de l'élément (13) en forme de dent de scie de l'enveloppe (12) est incliné coniquement par rapport à l'axe de la cheville d'un angle d'inclinaison qui est plus grand au moins légèrement que l'angle d'inclinaison de la surface intérieure latérale des évidements (6) dans le béton du tubage (2, 3) et
. **en ce que** le contour (16) extérieur de la cheville est au moins légèrement plus grand que la surface intérieure latérale des évidements (6).

4. Revêtement de tubage suivant les revendications 1 à 3, **caractérisé en ce que** l'enveloppe (12) de la cheville (8, 9) a des évidements (17) s'étendant dans l'axe longitudinal et par lesquels de l'air peut s'échapper des évidements (6) lors de l'enfoncement de la cheville.

5. Revêtement de tubage suivant les revendications 1 à 4, **caractérisé en ce que** le noyau (10, 11) de la cheville (8, 9) a un point destiné à se rompre, par exemple par une entaille ménagée dans le contour extérieur, et permettant que la rupture de la cheville se produise lorsque est dépassée la pression admissible sur la paroi de l'évidement (6) du tubage (2, 3).

6. Revêtement de tubage suivant les revendications 1 à 5, **caractérisé en ce que** la cheville (8, 9) est adaptée par modification appropriée du noyau (10, 11), par exemple par constitution en matériau plein ou de forme tubulaire, par variation du diamètre du noyau ou de l'épaisseur de paroi du tube ou des propriétés du matériau sans modification de son contour extérieur, à un certain comportement à la déformation sous l'action d'une force.
